## Europäisches Patentamt
## European Patent Office
## Office européen des brevets

(19)

(11) Publication number: **0 064 818**
**A1**

(12)

# EUROPEAN PATENT APPLICATION

(21) Application number: **82301959.1**

(22) Date of filing: **16.04.82**

(51) Int. Cl.³: **H 04 L 11/16**
**G 06 F 3/04**

(30) Priority: **20.04.81 US 255406**

(43) Date of publication of application:
**17.11.82 Bulletin 82/46**

(84) Designated Contracting States:
**DE FR GB**

(71) Applicant: **PITNEY BOWES INC.**
**Walter H. Wheeler Jr. Drive**
**Stamford Connecticut 06926(US)**

(72) Inventor: **Couper, Robert Arthur**
**1082 Fuchsia Drive**
**Sunnyvale California 94086(US)**

(72) Inventor: **Lillie, Terrance Lynn**
**4352 Silva Court**
**Palo Alto California 94306(US)**

(74) Representative: **Adams, William Gordon**
**18 St. Omer Road**
**Guildford Surrey GU1 2DB(GB)**

(54) Data collision avoidance method.

(57) A method for communicating among at least two data processing stations (50, 58) connected by a network. The method comprises the steps of continuously monitoring a communications medium (52) to detect the presence of data transfer, generating a random number, and transmitting data over the communications medium (52) after a length of time which is dependent on the random number from the time at which the absence of data transfer over the medium is detected. The probability of simultaneous data transmission by two or more data processing stations (50, 58) over the communications medium (52) is thereby greatly reduced.

EP 0 064 818 A1

./...

FIG. 1

FIG. 2

# DATA COLLISION AVOIDANCE METHOD

This case is related to a copending application entitled "Local Network Interface for Use in a Multi-Station Word Processing System", assigned to the present assignee and filed on 22nd April, 1981 under U.S. Application No. 256332 and filed concurrently as a European Application.

The present invention relates to network communication systems and more particularly, to local network interface systems for use in a word processing system.

To allow two or more so-called intelligent terminals to communicate with each other, various communication systems, called networks, have been developed. These networks allow terminals, work stations, or data processing stations to share each other's resources when required. A common communication medium is usually employed over which data can be transferred among the stations.

The communication medium most commonly employed is a coaxial cable, along which a plurality of taps are located. Stations can be connected directly to the coaxial cable via the taps, or stations can be connected to each other via a nodal point or node, which in turn is connected to the coaxial cable via a tap. The tap allows the node to broadcast data to and receive data from all other nodes or to and from individually connected stations on the communication network.

Any station on the network may initiate a transmission of data on a free channel of the communication medium. As a result of this ability of each station to initiate data transmission, it was soon discovered that two or more stations may attempt to transmit data simultaneously over the same communication medium. When this simultaneous transmission occurs, a collision of data results.

One method of dealing with collisions is described in U.S. Patent No. 4,063,220, issued to Metcalfe et al. The system disclosed in this reference consists of a network of two or more data processing stations and a common communication cable arranged in branched segments including taps distributed thereover. Tied to each tap is a transceiver connected to an associated interface stage. Each transceiver includes a transmitter, a receiver, and a gate which compares the data from the interface stage with the data on the cable to indicate whether such data are equal. A phase decoder within the transceiver detects the presence of other transmissions on the cable and detains data transmissions until no other transmissions along the cable are sensed.

At the end of a transmission on the network in the above cited reference, all stations queued to begin transmitting as soon as the active transmitting station has completed its transmission. Consequently, a data collision is created on the network when two or more stations, previously queued, begin to transmit. At this point, collision detection circuitry in each of the stations instructs the transmitting stations to abort their respective transmissions. Each station then waits a random period of time and then reinitiates its transmission. The random wait is introduced to minimize the probability of another data collision.

A subsequent data collision causes the transmitting stations to abort their respective transmissions again. A second random wait occurs, which although still random is longer than the first random wait. At the end of this second random wait, data transmission is again initiated. If the third transmission of data also results in a collision, then another random wait is introduced, longer than the second random wait, and so on.

The system hereinabove described provides a network which is capable of functioning under heavy loading conditions. It requires circuitry, however, in all of the network nodes to detect collisions.

A network communication system described in an article entitled "Perq Packet Stream Network" by D. Rosen of the Three Rivers Computer Corporation is also similar in many respects to that disclosed in the above-cited reference. In this packet stream network system, published in the digest of papers "Compcon80", IEEE Catalog No. 80CH1491-0C, pages 317-317A, the structure of components on the network, including collision detecting circuitry in all of the nodes, is similar to the structure shown in the above-cited reference.

The Perq network, however, uses a statistical distribution scheme by which collisions are minimized. Before a node transmits data, it determines whether another transmission over the communication medium is in progress. If it is, the node waits a random amount of time which is dynamically determined, and then further checks to determine whether the network is still busy. When the network is free (that is, when the node, after waiting a random amount of time, detects no transmission occurring over the communication medium), the node transmits its data.

Each time a node about to send data detects a transmission in progress, the range or interval of its random number generator increases. Consequently, it is less likely in this packet stream network system that a collision will occur than it is in the system of the

Metcalfe et al reference, since in that above-cited reference two or more nodes automatically begin transmitting data immediately upon detection of no usage of the communication medium.

In theory, therefore, at least one collision occurs every time two or more stations attempt to transmit data over a busy communication medium in the system disclosed in the Metcalfe et al reference; but the packet stream network system can operate with a smaller probability of any collisions, since the time at which the stations began transmitting data is dependent upon the precise moment at which each station last determined that the communication medium was unused, not the moment at which the communication medium was in fact unused.

Although a random wait is calculated and generated differently by both of the aforementioned systems and used for different purposes, upon detection of an unused communications medium both systems allow initiation of data transmission immediately.

U.S. Patent No. 3,825,897, issued to Lawton discloses an electronic alarm system having a number of stations, each one of which is capable of transmitting pulsed signals to a common line. In that system, collisions of signals between two or more stations are minimized by sensing when a pulsed signal is being transmitted over the line and locking out stations from transmitting during that time. In the Lawton system, transmission is permitted after a predetermined period of time following the last sensed pulse from another station on the line. Although the Lawton system precludes a station from transmitting a signal while the line is being used, it is possible that two or more stations will begin transmitting simultaneously in that system, causing collisions of signals, due to the fact that the transmission delay is a predetermined period of time for all of the stations.

The present invention is intended to simplify the method by which two or more data processing stations connected to a common communication medium communicate with each other.

Moreover, the present invention minimizes the probability of data collision among two or more transmitting stations without the use of collision detection circuitry.

In accordance with the present invention, there is provided a method for communicating among at least two data processing stations connected by a network. The method comprises the steps of continuously monitoring a communications medium to detect the presence of data transfer, generating a random number, and transmitting data over the communications medium after a length of time which is dependent on the random number from the time at which the absence of data transfer over the medium is detected. The probability of simultaneous data transmission by two or more data processing stations over the communications medium is thereby greatly reduced.

The invention will now be described by way of example with reference to the accompanying drawings, in which:

FIGURE 1 is a schematic block diagram in accordance with the present invention;

FIGURE 2 is a block diagram of one embodiment of the configuration of a network; and

FIGURE 3 is a flow chart showing the operation of the present invention.

The local network interface of the present invention provides a means for attaching two or more word or data processors to a common network so that resources may be shared within the network. Such shared resources can be common disk storage, for example, or common printers.  As many as 32 data processing stations or more can be attached to a common co-axial cable which can be up to one mile in length.  Transmission rates in such a network system are on the order of one megahertz.

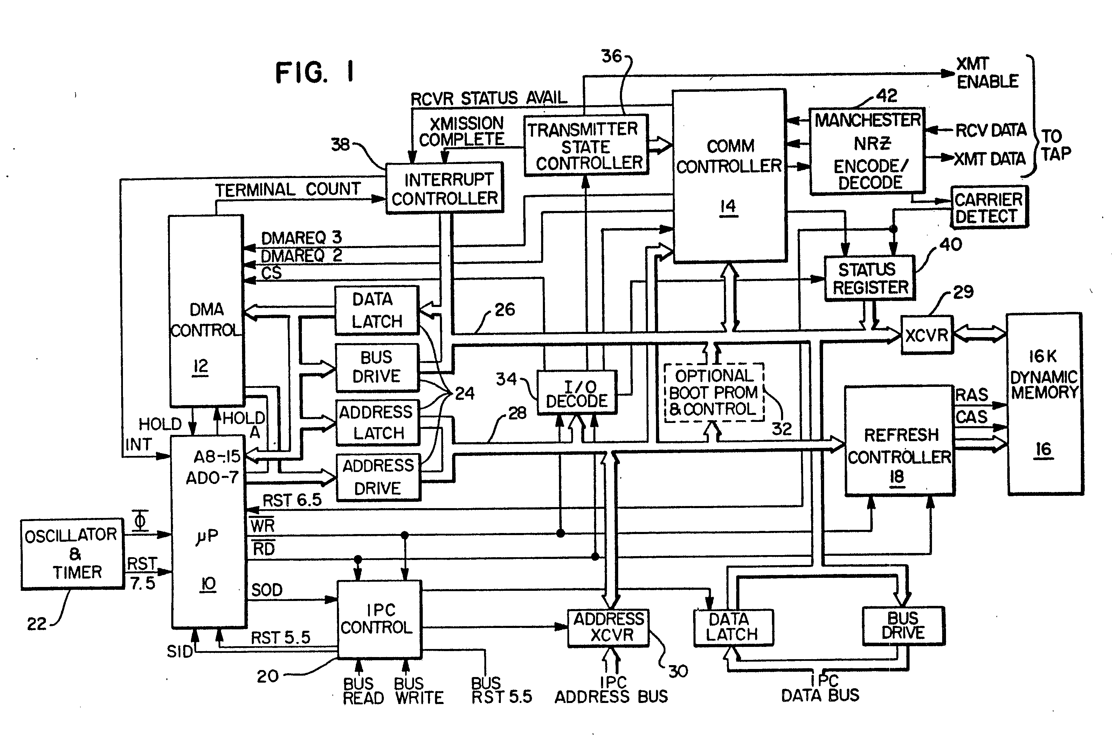

Referring now to FIGURE 1, the local network interface consists of an Intel Corp. model number 8085 microprocessor 10, a model number 8237-5 direct memory access (DMA) controller, a Signetics Corp. model number 2652 communications controller 14 and at least 16K bytes of dynamic memory 16 which is refreshed by an Intel Corp. model number 8202A dynamic memory controller 18.  The local network interface in this embodiment also includes an interprocessor communications (IPC) interface or controller 20 to allow the network to be attached to other processors in the system.  The use of such an IPC controller 20 is described in detail in copending U.S. Patent Application Serial No. 177,319, filed August 12, 1980, for "Communications Systems for a Word Processing System Employing Distributed Processing Circuitry".

An oscillator and timer 22 is connected to the processor 10 via lines which provide a timing signal called phi ($\phi$) and a RESTART (RST) 7.5 signal used for timing out the processor 10 communications operations.  The IPC controller 20 is connected to both the processor 10 and the refresh memory controller 18 via read (RD) and write (WR) lines.  The IPC controller 20 is also connected to the processor 10 via input and output lines (SID and SOD respectively) and by a RESTART (RST) 5.5 line.  The IPC controller 20 communicates with other processors on the network over a bus, not shown.

Data and address latches shown generally at reference numeral 24 are connected between the DMA controller 12 and processor 10 and the internal data and address buses 26 and 28 respectively.  The internal data bus 26 interconnects the communications controller 14 with the memory 16 via a transceiver 29 and is also connected to an IPC data bus, not shown. Similarly, the internal address bus 28 interconnects the communications controller 14 with the refresh memory controller 18 and is also connected to an IPC address bus, not shown, via an address transceiver 30.

A boot PROM and associated logic 32 is optionally connected between the internal address and data buses 28 and 26, respectively.

An input/output (I/O) decoder 34 is connected to the internal address bus 28 and the communications controller 14. The I/O decoder 34 also interconnects a transmitter state controller 36 which controls data communications of the communications controller 14, and an interrupt controller 38 which is directly connected to the internal data bus 26 and processor 10 via its interrupt (INT) line.

Also connected to the internal data bus 26 is a status register 40 which receives input signals from the I/O decoder 34 and the communications controller 14. A CARRIER DETECT signal may also be supplied to the status register 40. The status register 40 is adapted to send a signal to the processor 10 over a RESTART (RST) 6.5 line to indicate the status of the communications cable, as hereinafter described.

A data encoder/decoder is provided at reference numeral 42 to convert data from the communications controller 14 into Manchester non-return-to-zero (NRZ) format for transmission over the communications cable. The Manchester code is a bi-phase code described in detail in "Encoding Schemes Support High Density Digital Data Recording", by R. Severt published in "Computer Design" May 1980.

The local network interface is located on a single printed circuit board positioned within a housing 50 or floor module 60 such as is shown and described, for example, in copending U.S. Patent Application Serial No. 177,531, filed August 12, 1980, for "Word Precessing System Employing a Plurality of General Purpose Processor Circuits". The interface allows the above-identified local system to communicate with the network. Unlike other network communication systems, the present invention requires no complex circuitry for data collision detection as is explained in detail hereinafter.

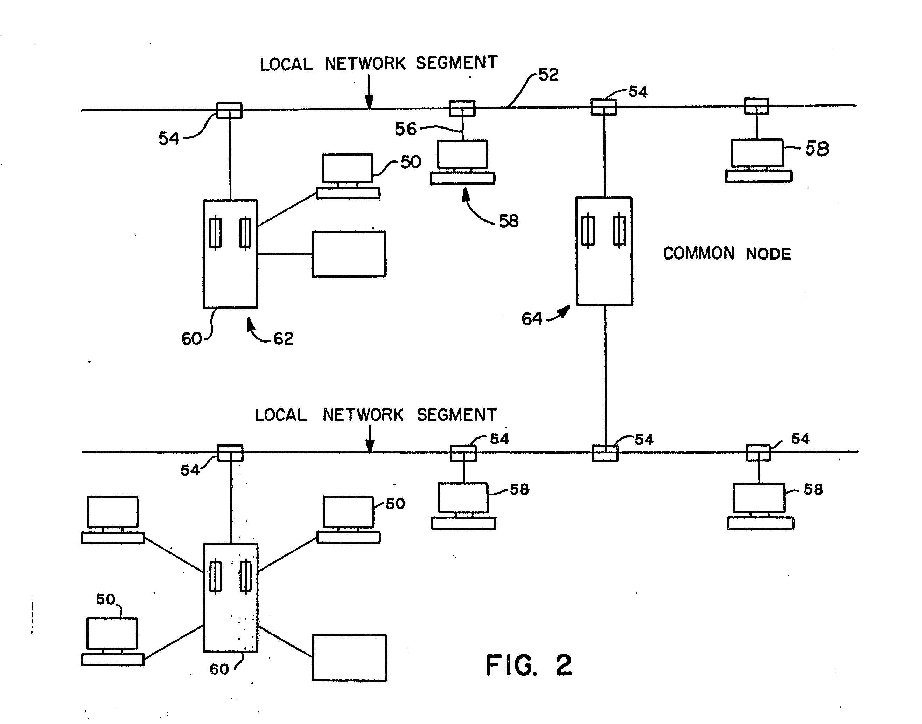

Referring now to FIGURE 2, individual data processing stations 50 can be attached to the communications co-axial cable or channel 52 by means of a tap 54. The tap only slightly affects the cable 52. Accordingly, the transmission characteristics of the cable 52 are not significantly disturbed. The tap 54 can be located up to 200 feet from its corresponding station 50. Normally the cable 52 is laid out in a substantially straight line in the ceiling or the floor of a building and users attach their stations 50 to the cable 52 with line lengths 56 of up to 200 feet. The line 56 includes the following signal lines: transmit enable (XMT ENABLE), receive data (RCV DATA) and transmit data (XMT DATA).

The configuration of data processing stations 50 on the network can take a variety of forms. A station 50 can be directly connected to the communications cable 52 via a tap 54, as shown generally at reference numeral 58. A number of work stations 50 can also be connected to a floor module 60 subsystem or cluster, as shown generally at reference numeral 62, which in turn is connected via a tap 54 to the cable 52. Moreover, two local network segments can be interconnected by means of a floor module 60 acting as a nodal point, as shown generally at reference numeral 64. No special modification to the local network interface is required to adapt a floor module 60 containing a local network interface for use as a nodal point. It should be appreciated that the afore-mentioned three configuration elements provide unlimited flexibility in arranging data processing stations 50 on the network and that the present disclosure is not intended to be limited to the configuration shown and described in FIGURE 2.

Referring also to FIGURE 1, the local network interface functions as follows. Information from the communications channel 52 (the co-axial cable) is transferred via the tap 54 to the local network residing in the data processing station 50 or floor module 60.

Information on the communications channel 52 is encoded by the encoder/decoder 42 using a Manchester code, as described, for example, in the aforementioned "Computer Design" article, which carries both clock and data information. Information from the communications controller 14 is in a non-return-to-zero (NRZ) code format. Information to or from the tap 54 must therefore pass through the Manchester (NRZ) encoder/decoder 42 to change the format of the data. Use of the Manchester code simplifies data recovery logic. The Manchester code carries clock information for every bit cell. Accordingly, the data recovery scheme used to convert this data to a usuable form for the communications controller 14 is greatly simplified.

Data from the communications channel 52 is separated at the tap 54. A common communications channel 52 is used for both transmit and receive operations, and the tap 54 provides both receive data (RCV DATA) and transmit data (XMT DATA) lines to the local network interface. Information from the tap 54 enters via the receive data line and passes through the Manchester decoder 42. This information is converted into a non-return-to-zero coding format. It enters the communications controller 14 and is converted from a serial form to a parallel form usuable by the remainder of the system.

The communications controller 14 formats data required for a protocol known as synchronous data link control (SDLC). The beginning of a transmission is signalled by a leading flag, followed by a terminal address byte, followed by data information. The communications controller 14 monitors the incoming data stream for an address which matches the address of the local terminal. The communications controller 14 interrupts the processor 10 only when an address match occurs. Accordingly, the throughput of the local processor is not compromised. The local processor 10 is not constantly interrupted to analyze the incoming data stream to determine whether the data is intended for the local station 50.

Once an incoming data stream intended for the local station 50 has been detected, a DMA process occurs under control of the DMA controller 12 to transfer information from the communications controller 14 into local memory 16. The processor 10 is then signalled by a XMISSION COMPLETE signal at the end of the receive data stream. It is interrupted by the communications controller 14 via the interrupt controller 38 to indicate the end of the transmission. The processor 10 can then access the data in its memory 16, analyze the incoming data stream, and react accordingly.

Information that is intended for other processors in the system is then passed over the IPC bus via the IPC interface 20 in a fashion similar to that employed by the system described in copending application Serial No. 177,319, as hereinabove referenced.

For information that is to be transmitted, data is first retrieved across the IPC bus via the IPC interface 20 and placed into local memory 16. The local network processor 10 then formats the data by storing it in a transmit buffer which resides within the local 16K memory 16. The data is preceded in the transmit buffer by the address of the station 50 to which the transmission is directed. When the data is formatted or blocked within the memory 16, the processor 10 initializes the DMA controller 12 to point to the first location of the transmit buffer. The DMA controller 12 is also loaded with byte code information to indicate how many bytes are in the present transmission packet.

Once that initialization has been completed, the processor 10 performs an output instruction to the transmitter state controller 36. The transmitter state controller 36 then assumes control of the communications controller 14 and begins a transmission of data onto the network. Transmission begins with a series of opening flags, and then data from the transmit buffer is transferred to the communications controller 14 one byte at a time on a DMA basis. The first byte consists of the destination address for the transmission followed by the data block. Data is passed from the communications controller 14 through the Manchester encoder 42 and to the tap 54 via the transmit data (XMT DATA) line 56.

Information is transferred across the communications channel 52 in packets. A packet consists of one or two opening flags, a destination address, and at least 256 bytes of data in a block. At the end of the block of data, there are provided two frame check sequence characters used to perform an error check on the data block. A series of closing flags are then provided to indicate the end of the frame.

The local network interface also includes provisions for an optional boot PROM 32. If the local network interface is used in a remote application without disk storage, program information for the station 50 can be loaded through the communications network (i.e., the internal data and address buses 26 and 28, respectively). The optional boot PROM 32 functions in a similar manner to the boot operation on the floppy disk controller described in the system disclosed in copending U.S. patent application Serial No. 177,652, filed August 12, 1980, for "Circuit for Controlling Start Up Operation in a Word Processing System Employing a Plurality of General Purpose Processor Circuits". When power is applied to the unit, the boot PROM 32 exists in the memory 16 from address 0 to 400 hex, and the processor 10 begins executing instructions from the boot PROM 32.

As information is transferred across the local network, it is transferred under control of the program within the boot PROM 32 into main memory 16. The boot PROM 32 is actually a phantom PROM in that although it occupies memory address space from 0 to 400 hex, information from the communications channel 52 can be written into those locations if write operations are performed into the memory 16. Once the boot operation is complete, the boot PROM 32 is ignored by the system, and the entire memory space is occupied by the RAM memory 16 on the board.

The local network interface includes an interrupt controller 38 to generate interrupts to the processor 10. The interrupt structure for the processor 10 utilizes the model 8085 microprocessor special RESTARTS 5.5, 6.5 and 7.5 as well as the TRAP interrupt. The TRAP interrupt is assigned to the communications controller 14. Whenever a receiver or a transmitter completes an operation, it signals the processor 10 by activating the TRAP line. TRAP is a non-maskable interrupt.

When the local network interface is a slave across the IPC channel, the master processor in the system can signal the local network interface processor 10 by activating the RESTART 5.5 line. This function is described in greater detail in co-pending U.S. patent application Serial No. 177,319, as hereinabove referenced.

The RESTART 6.5 line is tied to the CARRIER DETECT signal. If the state of the CARRIER DETECT signal changes, the local network interface processor 10 can be signaled. That is a maskable interrupt. The local network interface processor 10 can therefore decide whether to examine that line.

The RESTART 7.5 line is assigned to a timer 22. It is therefore possible to time out communications operations on the communications channel 52. The local network interface originates a transmission and expects an acknowledgement signal from its intended receiver within a certain amount of time. If it does not receive an acknowledgement, it can be assumed that the transmission has not been correctly received.

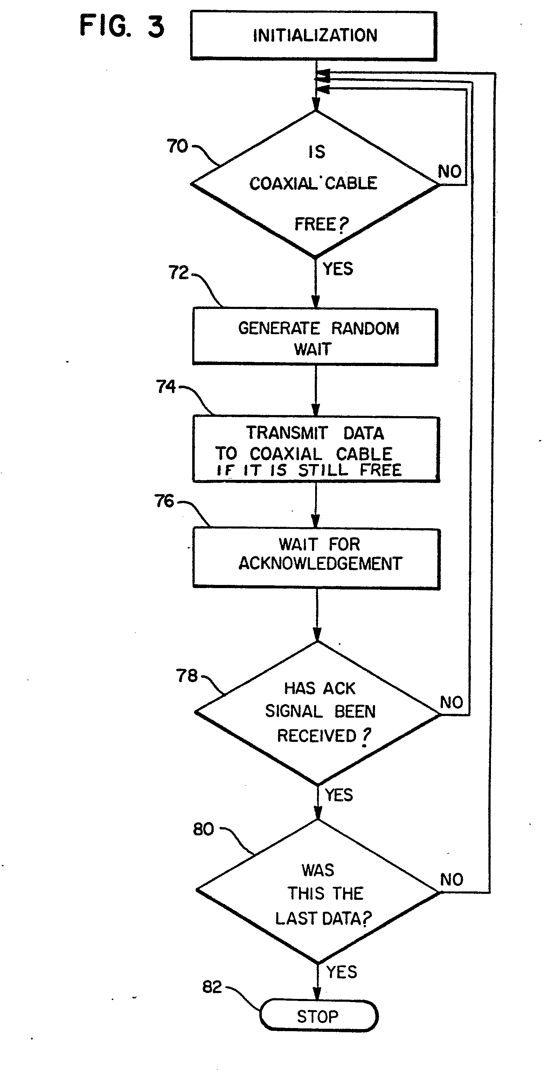

Referring now to FIGURE 3, a flow chart of transmission operations is shown. Because the network of the present invention is not intended to operate near its capacity bandwith, the contention scheme is greatly simplified as compared to other systems. Rather than attempting to detect collisions upon transmission, each transmitter with a data packet queued for transmission monitors the activity on the communications channel, step 70. When a potential transmitter in the system detects activity on the channel, it waits until the end of the existing transmission and introduces a random wait 72 at that point. The random wait routine is performed by the microprocessor of the transmitting device. At the end of the random wait, the transmitter begins transmission of data to the cable or channel if it is not currently carrying data 74 and proceeds to the end of the transmission. In the event of a data collision on the network (i.e., two or more stations 50 are transmitting over the cable 52 simultaneously) no acknowledgement from the intended receiver is received 78 for the transmission that is sent. The affected transmitter waits for a time out period 76. If, during this time out period, no acknowledgement is received, availability of the channel must again be determined 70.

If, however, an acknowledgement signal has been received by the transmitter, the local network interface is free to transmit another packet of data. The system determines whether the last data packet transmitted was the final data to be sent 80. If so, the system ceases operation 82. If more data remains to be transmitted, however, the system again detects whether the communications channel 52 is being used 70 and the transmission sequence is repeated.

From the foregoing discussion, it will be evident to those skilled in the art that a novel network apparatus and method of use thereof is herein disclosed. It will also be appreciated that the description of the preferred embodiment should in no way limit the number of possible system configurations which can be utilized as a result of the teaching of this disclosure.

CLAIMS:

1. A method for communicating among at least two data processing stations (50, 58) connected by a network, characterised in that it comprises the steps of
a) continuously monitoring a communications medium (52) to detect the presence of data transfer thereover;
b) generating a random number; and
c) transmitting data over said communications medium (52) after a length of time dependent on said random number from the time at which the absence of data transfer over said communications medium is detected.

2. A method for communicating in accordance with claim 1 characterised in that said random number is generated so that the probability of simultaneous data transmission by two or more data processing stations (50, 58) over said medium (52) is greatly reduced.

3. A method for communicating among at least two data processing stations (50, 58) connected by a network, characterised in that it comprises the steps of:
a) continuously monitoring a communications medium (52) to detect the presence of data transfer thereover;
b) generating a random number;
c) transmitting data over said communications medium (52) after a length of time dependent on said random number from the time at which the absence of data transfer over said communications medium (52) is detected; and
d) generating an acknowledgement signal when the data transferred over said communications
medium (52) has been successfully received.

4. A method for communicating among at least two
data processing stations (50, 58) connected by a network, characterised it that it comprises the steps of:
   a) continuously monitoring a communications
   medium (52) to detect the presence of data transfer thereover;
   b) generating a random number;
   c) transmitting data over said communications
   medium (52) after a length of time dependent on
   said random number from the time at which the
   absence of data transfer over said communications
   medium (52) is detected;
   d) generating an acknowledgement signal when the
   data transferred over said communications medium
   has been successfully received; and
   e) retransmitting said data over said communications medium when said acknowledgement signal
   is not received within a predetermined time.

5. The method of communicating in accordance with
claim 4 wherein the step of transmitting data over said
communications medium occurs after said communications
medium is determined to be available therefor.

6. A method of communicating in accordance with
claim 1 or 2 characterised in that it comprises the
step of generating an acknowledgement signal when the
data transferred over said communications medium (52)
has been successfully received.

7. A method of communicating in accordance with claim
6 characterised in that it comprises the step of retransmitting said data over said communications medium when said acknowledgement signal is not received within a predetermined time.

8. A method of communicating in accordance with claim 7 wherein the step of transmitting data over said communications medium occurs after said communications medium is determined to be available therefor.

FIG. I

LOCAL NETWORK SEGMENT

COMMON NODE

LOCAL NETWORK SEGMENT

FIG. 2

FIG. 3

```
                    ┌─────────────────────┐
                    │   INITIALIZATION    │
                    └─────────────────────┘

              70        IS
                   COAXIAL CABLE            NO
                      FREE?

                         YES

              72   ┌─────────────────────┐
                   │  GENERATE RANDOM    │
                   │       WAIT          │
                   └─────────────────────┘

              74   ┌─────────────────────┐
                   │   TRANSMIT DATA     │
                   │ TO COAXIAL CABLE    │
                   │ IF IT IS STILL FREE │
                   └─────────────────────┘

              76   ┌─────────────────────┐
                   │     WAIT FOR        │
                   │  ACKNOWLEDGEMENT    │
                   └─────────────────────┘

              78        HAS ACK
                   SIGNAL BEEN            NO
                    RECEIVED?

                         YES

              80         WAS
                      THIS THE           NO
                    LAST DATA?

                         YES

              82   ( STOP )
```

# EUROPEAN SEARCH REPORT

Application number

EP 82 30 1959

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | DE-A-2 249 670 (LICENTIA) <br> * Page 1, lines 1-6; page 2, lines 3-6; page 4, lines 1-17; page 5 * <br><br> --- | 1-8 | H 04 L 11/16 <br> G 06 F 3/04 |
| X,Y | GB-A-2 006 491 (MILLER) <br> * Column 1, lines 40-60, 69-125; column 3, lines 21-36, 70-98; figures 2-4 * <br><br> --- | 1-8 | |
| Y | 3RD USA-JAPAN COMPUTER CONFERENCE PROCEEDINGS, 10th-12th October 1978, AFIPS, San Francisco, pages 86-93, session 4-4-1/session 4-4-8, Baltimore, USA <br> G.S. CHRISTENSEN et al.: "Design and analysis of the access proto-col for hyperchannel networks" * Page 87, column 2, lines 5-26, 40-61; page 89, column 1, column 2, lines 1-36; figure 5 * <br><br> ----- | 3,4,6, 7 | |

**TECHNICAL FIELDS SEARCHED (Int. Cl. ³)**

H 04 L 11/16
G 06 F 3/04
H 04 B 7/24

The present search report has been drawn up for all claims

| Place of search | Date of completion of the search | Examiner |
|---|---|---|
| THE HAGUE | 28-07-1982 | DHEERE R.F.B.M. |